# EUROPÄISCHE PATENTSCHRIFT

(11) **EP 3 627 585 B1**
(45) Veröffentlichungstag und Bekanntmachung des Hinweises auf die Patenterteilung: **19.05.2021**
(21) Anmeldenummer: 19188817.1
(22) Anmeldetag: 29.07.2019
(51) Int. Cl.: H01M 50/20, H01M 10/6556

(54) **VERFAHREN ZUM ANORDNEN ZUMINDEST EINES BATTERIEMODULS IN ZUMINDEST EINEM TEIL EINES BATTERIEGEHÄUSES UND ANORDNUNGSVORRICHTUNG**
METHOD FOR ARRANGING AT LEAST ONE BATTERY MODULE IN AT LEAST ONE PART OF A BATTERY HOUSING AND ARRANGEMENT DEVICE
PROCÉDÉ D'AGENCEMENT D'AU MOINS UN MODULE DE BATTERIE DANS AU MOINS UNE PARTIE D'UN BOITIER DE BATTERIE ET DISPOSITIF D'AGENCEMENT

(30) Priorität: 21.09.2018 DE 102018216113
(43) Veröffentlichungstag der Anmeldung: 25.03.2020
(73) Patentinhaber: Audi AG, 85045 Ingolstadt (DE)
(72) Erfinder: Schüssler, Martin, 85092 Kösching (DE); Walter, Steffen, 85080 Gaimersheim (DE)

(56) Entgegenhaltungen:
- DE-A1-102010 038 600
- DE-A1-102016 201 726
- DE-A1-102016 216 050
- US-A1- 2015 249 238

## Beschreibung

Die Erfindung betrifft ein Verfahren zum Anordnen zumindest eines Batteriemoduls in zumindest einem Teil eines Batteriegehäuses, zum Beispiel einem Unterteil, mit einer Kühleinrichtung. Dabei wird zunächst der zumindest eine Teil des Batteriegehäuses bereitgestellt, welches eine Einsetzöffnung zum Einsetzten des mindestens einen Batteriemoduls aufweist, sowie die Kühleinrichtung, welche auf einer der Einsetzöffnung gegenüberliegenden Seite des Batteriegehäuses angeordnet ist. Die Kühleinrichtung weist dabei eine der Einsetzöffnung zugewandte erste Seite auf, und einen vorbestimmten Modul-Aufsetzbereich. Weiterhin wird eine Wärmeleitkomponente auf die erste Seite der Kühleinrichtung zumindest im vorbestimmten Modul-Aufsetzbereich eingebracht und das zumindest eine Batteriemodul im Modul-Aufsetzbereich eingesetzt. Dann wird das Batteriemodul in einer in Richtung der Kühleinrichtung verlaufenden Pressrichtung angepresst. Zur Erfindung gehört auch eine Anordnungsvorrichtung zum Anordnen zumindest eines Batteriemoduls in zumindest einem Teil eines Batteriegehäuses mit einer Kühleinrichtung.

Es ist aus dem Stand der Technik bekannt, Batteriemodule zur thermischen Anbindung beim Einbau in ein Batteriegehäuse auf eine Wärmeleitkomponente, zum Beispiel eine Schicht Wärmeleitpaste, auch Gapfiller genannt, zu pressen. Ein Teil des Batteriegehäuses, zum Beispiel der Boden, kann zum Beispiel durch eine Kühleinrichtung bereitgestellt sein. Durch die Wärmeleitkomponente werden thermisch isolierende Lufteinschlüsse zwischen dem teilweise unebenen Modulgehäuseboden sowie der Kühleinrichtung geschlossen, wodurch die Wärmeabfuhr vom Batteriemodul zur Kühleinrichtung verbessert wird.

Der Einsatz einer solchen Wärmeleitpaste zur besseren thermischen Anbindung eines Batteriemoduls an eine Kühleinrichtung ist beispielsweise auch in der DE 10 2013 207 535 A1 beschrieben. Weiterhin beschreibt die DE 10 2012 214 443 A1 die Verwendung einer Kunststoffmatrix aus einem aufgeschäumten Material innerhalb einer Batteriezelle zwischen dem Chemikalienträger und dem Zellgehäuse. Durch dieses aufgeschäumte Material soll aber vielmehr der Druck, der durch das Verspannen der Batteriezelle bedingt ist, gleichmäßig auf den Chemikalienträger verteilt werden. Des Weiteren beschreibt die DE 10 2011 052 513 A1 ein Gehäuseteil zur Aufnahme einer Traktionsbatterie eines Elektrofahrzeugs, welches aus mehreren Blechen gepresst wird, zwischen denen ein spaltfüllendes, wärmeleitendes Material eingebracht ist.

Die DE 10 2016 201 726 A1, die DE 10 2016 216 050 A1 und die DE 10 2010 038 600 A1 beschreiben jeweils Batterieanordnungen mit einem oder mehreren Batteriemodulen oder Speicherzellen, die zur verbesserten Wärmeabfuhr direkt oder indirekt mit einer Kühleinrichtung thermisch in Kontakt stehen. Die Kühleinrichtung wird jeweils mittels eines Federelements oder dergleichen zwischen einer Gehäusewand und dem zu kühlenden Batteriemodul eingespannt, so dass sie im Betrieb sicher zwischen dem Batteriemodul und der Gehäusewand gehalten ist.

Bei einer eingangs beschriebenen Konstellation, bei welcher ein Batteriemodul auf ein Gapfillerbett eingepresst werden soll, welches sich zwischen dem Batteriemodul und dem zum Beispiel durch eine Kühleinrichtung gebildeten Gehäuseboden befindet, besteht jedoch das Problem, dass die dabei entstehenden Kräfte, die sowohl auf das Modul bzw. die Batteriezellen wirken als auch auf das Batteriegehäuse, zu elastischer oder plastischer Verformung führen können, was wiederum unerwünscht ist. Dies ist insbesondere dadurch bedingt, dass herkömmliche Wärmeleitpasten bzw. Gapfiller relativ zähflüssig sind, wodurch zu einem gleichmäßigen Verteilen einer solchen Wärmeleitpaste durch das Anpressen des Batteriemoduls sehr große Kräfte zum Einsatz kommen müssen. Eine entsprechend formstabile Ausbildung des Batteriegehäuses und/oder der Batteriemodule führt nachteiligerweise jedoch zu einem erhöhten Materialaufwand, zu mehr erforderlichem Bauraum sowie vor allem zu mehr Gewicht, was jedoch gerade im Zusammenhang mit Hochvolt-Batterien für Elektro- oder Hybridfahrzeuge zur Reichweitenerhöhung so gering wie möglich gehalten werden sollte. Um entsprechend auch bei geringeren Anpresskräften beim Anpressen der Batteriemodule eine ausreichend gute Verteilung der Wärmeleitpaste und ein Schließen aller Luftlücken erreichen zu können, wäre andererseits eine größere Menge dieser Wärmeleitpaste vorzusehen, was wiederum Nachteile in Bezug auf ein erhöhtes Gewicht, und Kosten mit sich bringt und zudem die Wärmeleitung vom Batteriemodul zur Kühlvorrichtung beeinträchtigt. Gleiches oder Ähnliches gilt auch für andere, insbesondere nicht pastöse, Wärmeleitkomponenten.

Aufgabe der vorliegenden Erfindung ist es daher, ein Verfahren zum Anordnen zumindest eines Batteriemoduls in zumindest einem Teil eines Batteriegehäuses mit einer Kühleinrichtung, sowie eine Anordnungsvorrichtung bereitzustellen, welche eine möglichst effiziente Anordnung eines Batteriemoduls in dem Batteriegehäuse und eine möglichst effiziente Anbindung des Batteriemoduls an die Kühleinrichtung über die Wärmeleitkomponente ermöglichen.

Diese Aufgabe wird gelöst durch ein Verfahren und einer Anordnungsvorrichtung mit den Merkmalen gemäß den jeweiligen unabhängigen Patentansprüchen. Vorteilhafte Ausgestaltungen der Erfindung sind Gegenstand der abhängigen Patentansprüche, der Beschreibung und der Figuren.

Bei einem erfindungsgemäßen Verfahren zum Anordnen zumindest eines Batteriemoduls in zumindest einem Teil eines Batteriegehäuses, wie zum Beispiel ein Unterteil des Batteriegehäuses, mit einer Kühleinrichtung wird zunächst der zumindest eine Teil des Batteriegehäuses bereitgestellt, welcher eine Einsetzöffnung zum Einsetzten des mindestens einen Batteriemoduls aufweist, sowie die Kühleinrichtung, welche auf einer der Einsetzöffnung gegenüberliegenden Seite des Teils des Batteriegehäuses angeordnet ist. Die Kühleinrichtung bildet dabei eine Seite des Batteriegehäuses, nämlich den Boden. Weiterhin weist die Kühleinrichtung eine der Einsetzöffnung zugewandte erste Seite auf und einen vorbestimmten Modul-Aufsetzbereich. Zudem wird eine Wärmeleitkomponente, zum Beispiel eine Wärmeleitpaste, die auch als Gapfiller bezeichnet werden kann, auf die erste Seite der Kühleinrichtung zumindest im vorbestimmten Modul-Aufsetzbereich eingebracht und das zumindest eine Batteriemodul im Modul-Aufsetzbereich eingesetzt. Dabei kann beispielsweise zuerst die Wärmeleitkomponente eingebracht werden und danach das zumindest eine Batteriemodul auf die Wärmeleitkomponente aufgesetzt werden oder es kann auch erst das zumindest eine Batteriemodul eingesetzt werden und danach die Wärmeleitkomponente eingebracht werden, zum Beispiel injiziert werden. Weiterhin wird das Batteriemodul an die Wärmeleitkomponente in einer in Richtung der Kühleinrichtung verlaufenden Pressrichtung angepresst. Darüber hinaus wird zumindest vor dem Anpressen des Batteriemoduls eine Gegenhalter-Einrichtung auf einer der ersten Seite der Kühleinrichtung gegenüberliegenden und der Einsetzöffnung abgewandten zweiten Seite angeordnet, die die Kühleinrichtung beim Anpressen des zumindest einen Batteriemoduls im vorbestimmten Modul-Aufsetzbereich abstützt.

Durch das Abstützen der Kühleinrichtung, insbesondere entgegen der Pressrichtung, mittels der Gegenhalter-Einrichtung beim Anpressen des zumindest einen Batteriemoduls kann vorteilhafterweise eine Wölbung der Kühleinrichtung im Modul-Aufsetzbereich in Pressrichtung verhindert werden. Eine solche Wölbung kann selbst bei relativ dünner Ausbildung einer solchen Kühleinrichtung, zum Beispiel als Kühlplatte, verhindert werden. Durch die Erfindung lassen sich dadurch enorme Vorteile erzielen. Wie erwähnt ermöglicht das Abstützen der Kühleinrichtung eine deutlich dünnere Ausbildung einer solchen Kühleinrichtung, wodurch deutlich Gewicht und Kosten eingespart werden können. Dennoch kann das Batteriemodul mit einer sehr hohen Presskraft auf die Wärmeleitkomponente und an die Kühleinrichtung angepresst werden, ohne dass dies zu einer Wölbung der Kühleinrichtung in Pressrichtung führt. Eine Verhinderung einer solchen Wölbung ermöglicht es wiederum, dass die Wärmeleitkomponente besonders homogen über den kompletten Modul-Aufsetzbereich, auf welchen das Batteriemodul aufgesetzt wird, durch Anpressen des Batteriemoduls verteilt wird. Die Homogenität der Wärmeleitkomponente, d.h. ihre gleichdicke bzw. gleichhohe Verteilung über den Modul-Aufsetzbereich hinweg, ermöglicht wiederum eine besonders homogene Wärmeabfuhr, was für eine effiziente Kühlung der Batteriemodule besonders relevant ist. Durch die Möglichkeit der Verwendung einer hohen Anpresskraft kann gleichzeitig die Menge an benötigter Wärmeleitkomponente sehr gering gehalten werden. Daraus resultiert nach dem Anpressen des Batteriemoduls eine sehr dünne Wärmeleitkomponenten-Schicht zwischen der Unterseite des Batteriemoduls und der Kühleinrichtung. Wenngleich die Wärmeleitkomponente eine gute Wärmeleitfähigkeit besitzt, insbesondere eine Wärmeleitfähigkeit, die größer ist als die von Luft, insbesondere deutlich größer, so ist die Wärmeleitfähigkeit einer solchen Wärmeleitkomponente dennoch geringer als die von Metall, zum Beispiel Aluminium, sodass es dennoch wünschenswert ist, die Schicht der Wärmeleitkomponente möglichst dünn zu halten, um den Wärmeabtransport vom Batteriemodul zur Kühleinrichtung, welche vorzugsweise ein metallisches Material aufweist, zum Beispiel Aluminium, zu optimieren. Entsprechend lässt sich der Wärmeabtransport durch die erfindungsgemäßen Maßnahmen besonders effizient gestalten. Zusätzlich bedeutete die geringe Menge an Wärmeleitkomponente auch eine deutliche Kostenersparnis, sowie wiederum eine Gewichtsreduktion. Zudem lässt sich auch eine Beeinträchtigung oder Beschädigung der Kühleinrichtung durch das Verhindern der Wölbung in Pressrichtung mittels der Gegenhalter-Einrichtung verhindern. Insgesamt lässt sich durch die Erfindung ein Batteriemodul in besonders effizienter Weise in einem Batteriegehäuse bzw. Batteriegehäuseteil anordnen und durch das beschriebene Anordnungsverfahren die Effizienz der Modulkühlung enorm steigern.

Die Wärmeleitkomponente kann dabei zum Beispiel eine Wärmeleitpaste, einen Gapfiller, ein Gappad, ein Wärmeleitkleber, oder Ähnliches darstellen, und im Allgemeinen eine beliebige Form und Art eines Materials zur thermischen Anbindung sein.

Bei dem Teil des Batteriegehäuses kann es sich zum Beispiel, wie bereits erwähnt, um ein Unterteil des Batteriegehäuses handeln. Auf dieses kann beispielsweise nach Einbau des zumindest einen Batteriemoduls ein entsprechender Gehäusedeckel aufgebracht werden. Ein solches Batteriegehäuse kann Großteils, zum Beispiel bis auf die Kühleinrichtung, als eine Strangpresskonstruktion, zum Beispiel als Aluminiumsstrangpresskonstruktion, ausgebildet sein.

Weiterhin kann das Batteriegehäuse zur Aufnahme mehrerer Batteriemodule ausgebildet sein. Ein Batteriemodul umfasst dabei zumindest eine Batteriezelle, zum Beispiel eine Lithium-Ionen-Batteriezelle, vorzugsweise jedoch mehrere solcher Batteriezellen. Ist das Batteriegehäuse zur Aufnahme mehrerer Batteriemodule ausgebildet, so weist dieses entsprechend auch mehrere Modul-Aufsetzbereiche auf. Beispielsweise kann das Batteriegehäuse in mehrere Aufnahmebereiche für die jeweiligen Batteriemodule gegliedert sein, die zum Beispiel auch durch senkrecht zur Kühleinrichtung verlaufende Wände oder Streben voneinander separiert sein können, zumindest bereichsweise. Die Kühleinrichtung, die zum Beispiel als Kühlplatte ausgebildet sein kann, kann zum Beispiel unterseitig an der Strangpresskonstruktion bzw. im Allgemeinen dem übrigen Teil des Batteriegehäuses angeordnet sein, zum Beispiel angeschweißt sein oder verschraubt sein oder anderweitig befestigt sein. Die Kühleinrichtung kann dabei die mehreren Modul-Aufsetzbereiche für die jeweiligen Batteriemodule bereitstellen. Entsprechend kann eine Wärmeleitkomponente auf einen jeweiligen Modul-Aufsetzbereich aufgebracht werden, auf welchen dann anschließend die jeweiligen Batteriemodule eingesetzt bzw. aufgesetzt und wie beschrieben angepresst werden. Auch in diesem Fall können wiederum die Batteriemodule zuerst in den betreffenden Modul-Aufsetzbereichen angeordnet werden und anschließend erst die Wärmeleitkomponente in die jeweiligen Modul-Aufsetzbereiche eingebracht werden, zum Beispiel injiziert werden.

Die Gegenhalter-Einrichtung wird zumindest vor dem Anpressen des mindestens einen Batteriemoduls an der Unterseite der Kühleinrichtung angeordnet. Dies kann beispielswiese dadurch erfolgen, indem der Teil des Batteriegehäuses, in welches das zumindest eine Batteriemodul eingesetzt werden soll, auf die Gegenhalter-Einrichtung aufgesetzt wird. Insbesondere kann die Gegenhalter-Einrichtung auch bereits vor dem Einsetzen des zumindest einen Batteriemoduls, und insbesondere auch bereits vor dem Einbringen der Wärmeleitkomponente unterseitig an der Kühleinrichtung angebracht werden, um diese beim Anpressen des zumindest einen Batteriemoduls abzustützen.

Wie bereits beschrieben ist die Kühleinrichtung vorzugsweise als Kühlplatte ausgebildet. Dabei ist es gemäß einer weiteren vorteilhaften Ausgestaltung der Erfindung vorgesehen, dass die Kühleinrichtung als Kühlplatte mit Kühlkanälen ausgebildet ist, wobei die Kühlkanäle zumindest bereichsweise voneinander durch Zwischenbereiche der Kühlplatte separiert sind, durch welche keiner der Kühlkanäle verläuft. Derartige Kühlkanäle können vorteilhafterweise zum Kühlen des zumindest einen Batteriemoduls mit einem Kühlmittel bzw. Kühlmedium, welches flüssig und/oder gasförmig sein kann, durchströmt werden. Dies erlaubt eine besonders effiziente Kühlung der Batteriemodule. Durch die Erfindung und ihre Ausgestaltungen wird es nun vorteilhafterweise ermöglicht, eine solche Kühlplatte mit Kühlkanälen auf besonders einfache und gewichtssparende Weise auszubilden. Eine solche Kühlplatte mit Kühlkanälen kann beispielsweise durch zwei Bleche, insbesondere Aluminiumbleche, bereitgestellt sein, die zur Ausbildung von Kühlkanälen in den Zwischenbereiche miteinander verbunden sind, zum Beispiel verpresst sind, zum Beispiel mittels eines Roll-Bond-Verfahrens, oder Schweißen, oder ähnliches. Derartige Bleche können besonders dünnwandig ausgebildet sein, da sie aufgrund der Gegenhalter-Einrichtung selbst nicht sonderlich formstabil sein müssen, um beim Anpressen eine Wölbung in Pressrichtung zu verhindern.

Um ein Zusammendrücken der Kühlkanäle beim Anpressen des zumindest einen Batteriemoduls zu verhindern, ist es besonders vorteilhaft, wenn die Gegenhalter-Einrichtung mindestens ein Abstützelement aufweist, welches die zweite Seite der Kühleinrichtung zum Abstützen nur in zumindest einem der Zwischenbereiche der Kühlplatte kontaktiert. Mit anderen Worten kann die Gegenhalter-Einrichtung so ausgebildet sein, dass sie die Kühlplatte lediglich in den Zwischenbereichen zwischen den Kühlkanälen abstützt. Dadurch kann vorteilhafterweise erreicht werden, dass die Anpresskräfte zum Großteil über die Zwischenbereiche der Kühlplatte hinweg in die Abstützelemente der Gegenhalter-Einrichtung eingeleitet werden können, wodurch die auf die Kühlkanäle selbst wirkenden Kräfte reduziert werden können.

Weiterhin kann es dabei vorgesehen sein, dass die Gegenhalter-Einrichtung, insbesondere die Abstützelemente selbst, starr ausgebildet sind. Es kann auch vorgesehen sein, dass die Gegenhalter-Einrichtung mit einer Art Luftbalgsystem ausgebildet ist oder und zumindest zum Teil mit einer deformierbaren, insbesondere elastisch deformierbaren Kontaktfläche, welche die Kühleinrichtung unterseitig großflächig kontaktiert, d.h. nicht nur in den Zwischenbereichen zwischen den Kühlkanälen. Beispielsweise kann die Gegenhalter-Einrichtung so ausgebildet sein, dass sich deren Kontaktfläche unter Einwirkung der in Pressrichtung wirkende Anpresskraft beim Anpressen des zumindest einen Batteriemoduls zumindest bereichsweise in Anpassung an die unterseitige Formgebung der Kühleinrichtung deformiert. Derartige deformierbaren Eigenschaften, insbesondere elastisch deformierbaren Eigenschaften lassen sich zum Beispiel durch ein pneumatisches System, wie das erwähnte Luftbalgsystem, einem hydraulischen System und/oder einem hydropneumatischen System als Teil der Gegenhalter-Einrichtung umsetzen. Auch die Kontaktfläche der Gegenhalter-Einrichtung kann als eine Art elastische Membran, zum Beispiel aus einem Elastomer oder Gummi ausgebildet sein. Das Abstützelement der Gegenhalter-Einrichtung kann auch zum Beispiel vollständig aus einem elastisch deformierbaren Festkörper wie zum Beispiel Gummi sein. Damit stehen vielzählige vorteilhafte Möglichkeiten zur Ausbildung der Gegenhalter-Einrichtung bereit.

Weiterhin ist es bevorzugt, dass die Gegenhalter-Einrichtung, auch im Falle dass diese mehrere Abstützelemente zum großflächigen Abstützen der Kühlplatte bzw. der Kühleinrichtung aufweist, diese Abstützelemente jeweils zentriert den jeweiligen Modul-Aufsetzbereich der Kühlplatte entgegen der Pressrichtung abstützen.

Bei einer weiteren besonders vorteilhaften Ausgestaltung der Erfindung ist zumindest ein Teil der Gegenhalter-Einrichtung in Pressrichtung beweglich ausgebildet, und wird während des Anpressens des mindestens einen Batteriemoduls in Pressrichtung bewegt. Auch dies lässt sich bei einer Ausbildung der Gegenhalter-Einrichtung mit starren Abstützelementen sowie mit deformierbaren, insbesondere elastisch deformierbaren Abstützelementen realisieren. Durch eine solche bewegliche bzw. verfahrbare Ausbildung der Gegenhalter-Einrichtung kann das Fließverhalten und damit die Verteilung der Wärmeleitkomponente deutlich besser gesteuert und beeinflusst werden.

Dabei ist es weiterhin vorteilhaft, wenn mittels der Gegenhalter-Einrichtung vor dem Anpressen des zumindest einen Batteriemoduls eine entgegen der Pressrichtung wirkende Gegenkraft im Modul-Aufsetzbereich auf die Kühleinrichtung aufgebracht wird, so dass vor dem Anpressen die Kühleinrichtung im Modul-Aufsetzbereich eine Wölbung entgegen der Pressrichtung aufweist. Mit anderen Worten drückt die Gegenhalter-Einrichtung vor dem Anpressen des zumindest einen Batteriemoduls derart unterseitig gegen die Kühleinrichtung, insbesondere in den jeweiligen Modul-Aufsetzbereichen, sodass die Kühleinrichtung in den jeweiligen Modul-Aufsetzbereichen nach innen, das heißt in Richtung der Einsetzöffnung, gewölbt ist bzw. ausgebeult ist. Eine solche Wölbung bewirkt, dass zu Beginn des Anpressens des zumindest einen Batteriemoduls im zentralen Bereich des Modul-Aufsetzbereichs, in welchem die Wölbung am größten ist, auch die Presskräfte in Pressrichtung am größten sind. Hierdurch wird bewirkt, dass die anfangs hauptsächlich in diesem zentralen Bereich eingebrachte Wärmeleitkomponente besonders effizient nach außen gedrückt wird und sich damit besonders gleichmäßig über den gesamten Modul-Aufsetzbereich hinweg verteilt.

Während des Anpressens des mindestens einen Batteriemoduls kann vorteilhafterweise der mindestens eine Teil der Gegenhalter-Einrichtung in Pressrichtung bewegt werden, bis die Kühleinrichtung im Modul-Aufsetzbereich planar ausgerichtet ist. Mit anderen Worten wird die anfangs entgegen der Pressrichtung vorhandene Wölbung durch Anpressen des zumindest einen Batteriemoduls einerseits und durch das Bewegen des zumindest einen Teils der Gegenhalter-Einrichtung in Pressrichtung andererseits zunehmend reduziert, bis letztendlich die Kühleinrichtung im Modul-Aufsetzbereich, insbesondere insgesamt, planar ausgerichtet ist. Hierdurch lässt sich eine besonders effiziente und homogene Verteilung der Wärmeleitkomponente erreichen.

Darüber hinaus kann der Teil des Batteriegehäuses in Pressrichtung verlaufende und den vorbestimmten Modul-Aufsetzbereich senkrecht zur Pressrichtung begrenzende Begrenzungselemente aufweisen, die an der Kühleinrichtung montiert sind. Derartige Begrenzungselemente können zum Beispiel durch Querstege bereitgestellt sein, die die einzelnen Modulbereiche voneinander separieren, zum Beispiel als eine Art Wand oder Zwischenwand zwischen Batteriemodulen. Derartige Begrenzungselemente können ebenfalls Teil der eingangs beschriebenen Strangpresskonstruktionen, mit welcher das Batteriegehäuse ausgebildet sein kann, sein. Die Kühlplatte kann dann unterseitig an diesen Begrenzungselementen befestigt sein, zum Beispiel mit diesen verschweißt sein oder verschraubt sein oder anderweitig befestigt sein. Der Großteil der Anpresskräfte wirkt dann entsprechend auf die zwischen diesen Begrenzungselementen befindlichen Teilen der Kühleinrichtung. Entsprechend ist es vorteilhaft, wenn die Gegenhalter-Einrichtung so ausgebildet ist, dass diese die Kühleinrichtung gerade im Bereich zwischen diesen Begrenzungselementen abstützt. Dadurch kann also vorteilhafterweise ein Ausbeulen oder Wölben der Kühleinrichtung zwischen den Begrenzungselementen in Pressrichtung verhindert werden. Gleichzeitig können die Begrenzungselemente auch als Anschlagelemente genutzt werden, wie dies nachfolgend näher beschrieben wird.

Bei einer weiteren vorteilhaften Ausgestaltung der Erfindung weist das zumindest eine Batteriemodul ein Modulgehäuse auf, an welchem an zumindest zwei gegenüberliegenden Seiten ein Flansch angeordnet ist, wobei das Anpressen des Batteriemoduls mittels eines Anpresswerkzeugs erfolgt, welches eine Anpresskraft in Pressrichtung auf die Flansche ausübt. Auf diese Weise lassen sich durch die Flansche besonders geeignete Angriffspunkte für die Presskräfte bereitstellen, die eine Überlastung am Modul selbst verhindern, wodurch vorteilhafterweise eine elastische oder plastische Verformung der Batteriemodule selbst vermieden werden kann. Dabei kann ein solcher Flansch nicht nur an zwei gegenüberliegenden Seiten eines solchen Modulgehäuses angeordnet sein, sondern beispielsweise auch das Modulgehäuse vollständig umlaufend ausgebildet sein. Dadurch lassen sich die benötigten Presskräfte besonders vorteilhaft auf eine möglichst große Angriffsfläche am Modulgehäuse verteilen. Im Modulgehäuse ist mindestens eine Batteriezelle aufgenommen, vorzugsweise auch mehrere Batterieeinzelzellen.

Weiterhin ist es vorteilhaft, wenn das Batteriemodul während des Anpressens soweit in Pressrichtung bewegt wird, bis eine der Kühleinrichtung zugewandte Seite der Flansche auf den Begrenzungselementen aufliegt. Somit können die Begrenzungselemente gleichzeitig auch als Anschlagselemente genutzt werden, die die Bewegung des Batteriemoduls in Pressrichtung begrenzen und den Bewegungsendpunkt bestimmen. An dieser Stelle lassen sich die Batteriemodule dann vorteilhafterweise auch über ihr Modulgehäuse mit dem Batteriegehäuse verschrauben oder anderweitig an diesem befestigen.

Nach dem Anpressen der Batteriemodule wird die Gegenhalter-Einrichtung entfernt und es können übrige Montageschritte, zum Beispiel das Aufsetzen eines Gehäusedeckels und das Montieren des Batteriegehäuses mit den eingesetzten Batteriemodulen auf einem Unterfahrschutz oder andere oder weitere Montageschritte ausgeführt werden. Die letztendlich so bereitgestellte Batterie, insbesondere Hochvolt-Batterie, kann dann im Kraftfahrzeug montiert werden, vorzugsweise im Unterbodenbereich des Kraftfahrzeugs.

Entsprechend soll auch eine mittels des erfindungsgemäßen Verfahrens oder eines seiner Ausführungsformen bereitgestellten Batterieanordnung als zur Erfindung gehörend angesehen werden, sowie auch ein Kraftfahrzeug mit einer solchen Batterieanordnung.

Des Weiteren betrifft die Erfindung auch eine Anordnungsvorrichtung zum Anordnen zumindest eines Batteriemoduls in zumindest einem Teil eines Batteriegehäuses mit einer Kühleinrichtung, die einen Gehäuseboden des Batteriegehäuses bildet, wobei die Anordnungsvorrichtung dazu ausgelegt ist, dass zumindest eine Batteriemodul in einem in einem vorbestimmten Modul-Aufsetzbereich der Kühleinrichtung auf eine Wärmeleitkomponente angeordneten Zustand in eine in Richtung der Kühleinrichtung verlaufende Pressrichtung anzupressen. Weiterhin weist die Anordnungsvorrichtung eine Gegenhalter-Einrichtung auf, die dazu ausgelegt ist, in einem auf einer Seite der Kühleinrichtung angeordneten Zustand, die Kühleinrichtung beim Anpressen des zumindest einen Batteriemoduls im vorbestimmten Modul-Aufsetzbereich entgegen der Pressrichtung abzustützen und nach dem Anpressen entfernt zu werden.

Die für das erfindungsgemäße Verfahren und seine Ausgestaltungen genannten Vorteile gelten in gleicher Weise für die erfindungsgemäße Anordnungsvorrichtung. Darüber hinaus ermöglichen die im Zusammenhang mit dem erfindungsgemäßen Verfahren und seinen Ausgestaltungen beschriebenen Verfahrensschritte die Weiterbildung der erfindungsgemäßen Anordnungsvorrichtung durch weitere korrespondierende gegenständliche Merkmale.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer Anordnungsvorrichtung zum Anordnen eines Batteriemoduls in zumindest einem Teil eines Batteriegehäuses mit einer Kühleinrichtung, gemäß einem Ausführungsbeispiel der Erfindung;
- Fig. 2: eine schematische Darstellung des mittels einem Verfahren gemäß einem Ausführungsbeispiel der Erfindung im Batteriegehäuse angeordneten Batteriemoduls;
- Fig. 3: eine schematische Veranschaulichung eines Verfahrens zum Anordnen eines Batteriemoduls im Batteriegehäuse in einem ersten Stadium des Anpressens gemäß einem weiteren Ausführungsbeispiel der Erfindung;
- Fig. 4: eine schematische Veranschaulichung eines Verfahrens zum Anordnen eines Batteriemoduls im Batteriegehäuse in einem zweiten Stadium des Anpressens gemäß dem weiteren Ausführungsbeispiel der Erfindung; und
- Fig. 5: eine schematische Veranschaulichung eines Verfahrens zum Anordnen eines Batteriemoduls im Batteriegehäuse in einem dritten Stadium des Anpressens gemäß dem weiteren Ausführungsbeispiel der Erfindung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

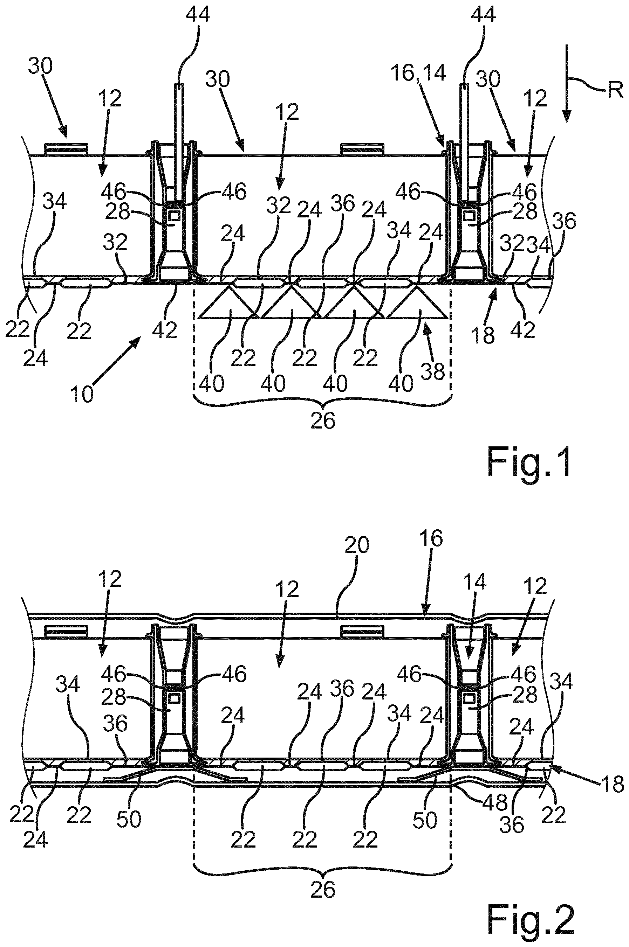

Fig. 1 zeigt eine schematische Darstellung einer Anordnungsvorrichtung 10 gemäß einem Ausführungsbeispiel der Erfindung. Diese dient zum Anordnen eines Batteriemoduls 12 in zumindest einem Teil 14 eines Batteriegehäuses 16 mit einer Kühleinrichtung 18. Das Batteriegehäuse 16 kann neben dem in Fig. 1 dargestellten Unterteil 14 auch einen geeigneten Deckel 20 aufweisen, der in Fig. 2 dargestellt ist. Wie in Fig. 1 dargestellt, kann das Batteriegehäuse 16 zur Aufnahme mehrerer Batteriemodule 12 ausgelegt sein. Die Kühleinrichtung 18, welche in diesem Beispiel als Kühlplatte mit Kühlkanälen 22 und zwischen den Kühlkanälen 22 befindlichen Zwischenbereichen 24, welche die Kühlkanäle 22 voneinander separieren, ausgebildet ist, bildet den Boden des Batteriegehäuses 16. Zum Aufnehmen bzw. Aufsetzen der jeweiligen Batteriemodule 12 weist die Kühleinrichtung 18 jeweilige zugeordnete Modul-Aufsetzbereiche 26 auf. Die jeweiligen Modul-Aufsetzbereiche 26, von denen exemplarisch hier nur einer mit einem Bezugszeichen versehen ist, sind durch Querstege 28 voneinander separiert. Diese Querstege 28 verlaufen dabei senkrecht zur Kühleinrichtung 18. Zum Einsetzen der Batteriemodule 12 in das Batteriegehäuse 16 weist das Batteriegehäuse 16, insbesondere dessen Unterteil 14, jeweilige Einsetzöffnungen 30 auf. Diese Einsetzöffnungen 30 können nach Montage der Batteriemodule 12 im Batteriegehäuseunterteil 14 durch den Deckel 20 des Batteriegehäuses 16 verschlossen werden.

Das Batteriegehäuse 16 kann zumindest zum Teil als Aluminiumsstrangpresskonstruktion ausgebildet sein. Um eine möglichst gute thermische Anbindung der jeweiligen Batteriemodule 12 an die Kühleinrichtung 18 bereitzustellen, befindet sich in den jeweiligen Modul-Aufsetzbereichen 26 zwischen einer ersten Seite 32 der Kühleinrichtung 18, welche den Einsetzöffnungen 30 zugewandt ist, und der Unterseite 34 der jeweiligen Batteriemodule 12 eine Wärmeleitkomponente 36, zum Beispiel eine Wärmeleitpaste bzw. Gapfiller. Eine solche Wärmeleitkomponente 36 sollte optimalerweise als möglichst dünne Schicht mit möglichst konstanter Höhe zwischen den Batteriemodulen 12 und der Kühleinrichtung 18 angeordnet sein. Um eine derart dünne Schicht erreichen zu können, sind sehr hohe Anpresskräfte zum Anpressen der Batteriemodule 12 auf diese Wärmeleitkomponente 36 in den jeweiligen Modul-Aufsetzbereichen 26 erforderlich, die zum Beispiel im Bereich von 25 N/cm² liegen. Um gleichzeitig eine homogene Verteilung dieser Wärmeleitkomponente 36 zu ermöglichen, muss zusätzlich ein Durchbiegen der Kühleinrichtung in den zentralen Bereichen der jeweiligen Modul-Aufsetzbereiche 26 verhindert werden. Gleichzeitig ist es vorteilhaft, wenn die Kühleinrichtung 18 möglichst leicht, d.h. mit geringem Gewicht, ausgebildet werden kann.

Dies wird nun vorteilhafterweise durch die Anordnungsvorrichtung 10 ermöglicht. Diese weist zum einen eine Gegenhalter-Einrichtung 38 auf. Diese Gegenhalter-Einrichtung 38 umfasst in diesem Beispiel wiederum mehrere Abstützelemente 40, die die Kühleinrichtung 18 auf einer zweiten Seite 42, welche der ersten Seite 32 gegenüber liegt und von den jeweiligen Einsetzöffnungen 30 abgewandt ist, abstützen. Dadurch lassen sich die Batteriemodule 12 besonders effizient im Batteriegehäuse 16 anordnen. Zu diesem Zweck kann also zunächst in die jeweiligen Modul-Aufsetzbereiche 26 eine vorbestimmte Menge Wärmeleitkomponente 36 eingebracht werden, insbesondere auf die erste Seite 32 der Kühleinrichtung 18. Anschließend können die jeweiligen Batteriemodule 12 auf die jeweiligen Modul-Aufsetzbereiche 26, insbesondere auf die Wärmeleitkomponente 36, aufgesetzt werden. Alternativ kann auch erst das jeweilige Batteriemodul 12 eingesetzt werden und danach die Wärmeleitkomponente 36 eingespritzt werden, insbesondere zwischen das Batteriemodul 12 und die Kühleinrichtung 18. Anschließend werden die Batteriemodule 12 in eine in Richtung der Kühleinrichtung 18 verlaufende Pressrichtung R an die Wärmeleitkomponente 36 und insbesondere gegen die Kühleinrichtung 18 angepresst. Während dieses Anpressens ist nun vorteilhafterweise durch die Gegenhalter-Einrichtung 38 das Bereitstellen einer Gegenkraft, d.h. entgegen der Pressrichtung R, möglich, sodass eine Wölbung der Kühleinrichtung 18 im Modul-Aufsetzbereich 26 in Pressrichtung R verhindert wird.

Weiterhin sind in diesem Beispiel die Abstützelemente 40 derart angeordnet, dass diese die Kühleinrichtung 18 nur in den Zwischenbereichen 24 zum

Abstützen kontaktieren. Dadurch kann vorteilhafterweise die in der Pressrichtung R wirkende Anpresskraft über diese Zwischenbereiche 24 in die jeweiligen Abstützelemente 40 eingeleitet werden. Entsprechend verringert sich der Druck auf die Wandungen der Kühlkanäle 22. Dies ermöglicht wiederum eine dünnwandige und damit gewichtstechnisch leichtere Ausbildung der Kühleinrichtung 18, ohne das Risiko einer möglichen elastischen oder plastischen Verformung im Bereich der Kühlkanäle 22 in Kauf nehmen zu müssen.

Zum Anpressen der Batteriemodule 12 weist die Anordnungsvorrichtung 10 weiterhin ein Anpresswerkzeug 44 auf, mittels welchem die in Pressrichtung R gerichtete Anpresskraft auf die Batteriemodule 12 ausgeübt wird. Um beim Anpressen der Batteriemodulen 12 auch eine Deformation oder Beschädigung der Batteriemodule 12 selbst zu verhindern, ist es weiterhin besonders vorteilhaft, wenn das Gehäuse dieser Batteriemodule 12 zumindest an zwei gegenüberliegenden Seiten, und vorzugsweise komplett umlaufend, einen Flansch 46 aufweist, auf welchen zum Anpressen der Batteriemodule 12 mittels des Anpresswerkzeugs 44 die Anpresskraft aufgebracht wird.

Nachdem die Batteriemodule 12 auf die beschriebene Weise im Batteriegehäuse 16, insbesondere in dessen Unterteil 14 angeordnet wurden, wird die Anordnungsvorrichtung 10 entfernt bzw. wird das Batteriegehäuseteil 14 mit den Batteriemodulen 12 von der Anordnungsvorrichtung 10 entfernt, und es können nachfolgende Montageschritte zur Bereitstellung der finalen Batterieanordnung, insbesondere einer Hochvolt-Batterie, durchgeführt werden. Diese Batterieanordnung ist in Fig. 2 schematisch dargestellt. Die einzelnen Batteriemodule 12 können weiterhin an dem Batteriegehäuse 16, zum Beispiel an den Querstegen 28, befestigt werden, zum Beispiel mit diesen verschraubt werden, und weiterhin kann auch ein Deckel 20 des Batteriegehäuses 16 auf den Batteriegehäuseunterteil 14 aufgesetzt und an diesem befestigt werden. Das die Batteriemodule 12 beinhaltende Batteriegehäuse 16 kann weiterhin optional auf einem Unterfahrschutz 48 montiert werden. Dies ist besonders vorteilhaft, wenn die Batterieanordnung im Unterbodenbereich eines Kraftfahrzeugs angeordnet werden soll, da ein solcher Unterfahrschutz 48 die Batteriemodule 12 sowie die übrigen Komponenten dieser Batterieanordnung vor Steinschlag und anderen Umwelteinflüssen schützt. Zwischen dem Unterfahrschutz 48 und dem Batteriegehäuse 14 können zudem Abstandshalterelemente angeordnet sein, die in diesem Beispiel als Trapezbleche 50 ausgebildet sind.

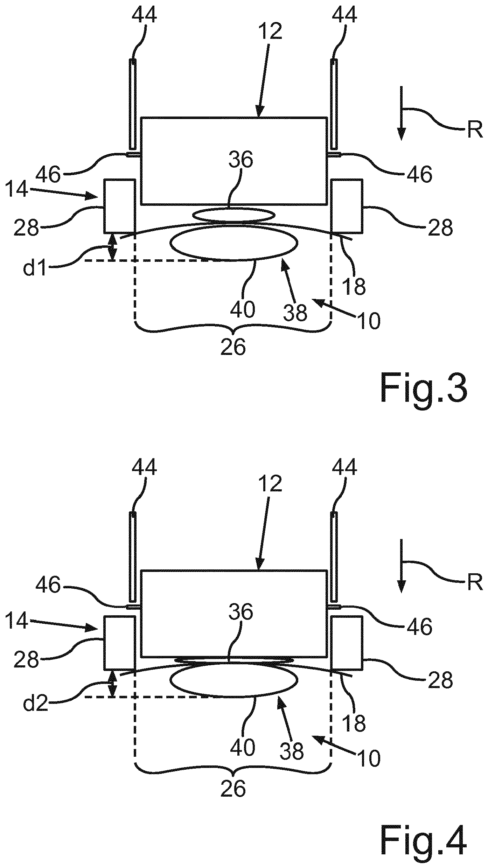

Fig. 3, Fig. 4 und Fig. 5 zeigen eine Veranschaulichung eines Verfahrens zum Anordnen eines Batteriemoduls 12 in einem Batteriegehäuse 16 bzw. dessen Unterteil 14 in verschiedenen zeitlich aufeinanderfolgenden Stadien des Anpressens gemäß einem weiteren Ausführungsbeispiel der Erfindung. Auch hier wiederum erfolgt das Anordnen des Batteriemoduls 12 im Batteriegehäuseunterteil 14 mittels einer Anordnungsvorrichtung 10, welche wiederum eine Gegenhalter-Einrichtung 38 mit einem Abstützelement 40 umfasst, sowie wiederum das Anpresswerkzeug 44 zum Anpressen des Batteriemoduls 12 auf die Wärmeleitkomponente 36 im Modul-Aufsetzbereich 26 der Kühleinrichtung 18. In diesem Beispiel ist nun die Gegenhalter-Einrichtung 38 oder zumindest ein Teil davon, zum Beispiel das Abstützelement 40 im Gegensatz zum Beispiel aus Fig. 1 beweglich ausgebildet, insbesondere in und entgegen der Pressrichtung R, was eine besonders vorteilhafte Verteilung der Wärmeleitkomponente 36 und eine besonders angepasste Druckverteilung über den Modul-Aufsetzbereich 26 hinweg erlaubt. Auch in diesem Beispiel kann wiederum zunächst eine vorbestimmte Menge Wärmeleitkomponente 36 auf die Kühleinrichtung 18 im betreffenden Modul-Aufsetzbereich 26 aufgebracht werden, insbesondere in einem zentralen Bereich, wie in Fig. 3 dargestellt. Weiterhin wird das Batteriemodul 12 auf die Wärmeleitkomponente 36 aufgesetzt und mittels der des Anpresswerkzeugs 44 in Pressrichtung R an die Wärmeleitkomponente 36 angepresst. Vor dem Anpressen, wird mittels des Abstützelements 40 bereits eine Gegenkraft, das heißt entgegen der Pressrichtung R, auf den zentralen Bereich des Modul-Aufsetzbereichs 26 von unten auf die Kühleinrichtung 18 ausgeübt, so dass sich die Kühleinrichtung 18, die wiederum als Kühlplatte mit optionalen Kühlkanälen 22 ausgebildet sein kann, entgegen der Pressrichtung R, d.h. also hier nach oben, wölbt. Diese Wölbung ist in diesem Beispiel überzeichnet dargestellt. Diese Wölbung kann auch nur wenige Millimeter gegenüber denjenigen Bereichen der Kühlplatte 18, die an den Querstegen 28 montiert sind, erhöht sein. Beispielsweise kann der zentrale Bereich der Kühlplatte 18 zwischen diesen Querstegen 28 um zum Beispiel ein bis vier Millimeter erhöht sein. Während das Batteriemodul 12 an die Kühlplatte 18 und der darauf befindlichen Wärmeleitkomponente 36 angepresst wird, wird das Abstützelement 40 ebenfalls in Pressrichtung R bewegt, jedoch so, dass weiterhin eine Gegenkraft durch dieses Abstützelement 40 entgegen der Pressrichtung R auf die Kühleinrichtung 18 aufgebracht wird. Durch die Bewegung des Abstützelements 40 verringert sich die Wölbung der Kühlplatte 18, wie in Fig. 4 dargestellt, und die Wärmeleitkomponente 36 verteilt sich und wird aus dem zentralen Bereich des Modul-Aufsetzbereichs 26 nach außen gedrückt.

Das Bewegen des Abstützelements 40 in Pressrichtung R ist in Fig. 3 bis Fig. 5 durch die jeweiligen Abstände d1, d2 und d3 veranschaulicht. Diese stellen die Abstände zwischen einem Bezugspunkt des Abstützelements 40, in diesem Beispiel dessen Unterseite, und einem Bezugspunkt der Querstege 28 dar, wobei durch Bewegen des Abstützelements 40 sich auch dieser Abstand d1, d2, d3 vergrößert, d.h. der Abstand d1 ist kleiner als der Abstand d2, und dieser ist wiederum kleiner als der Abstand d3.

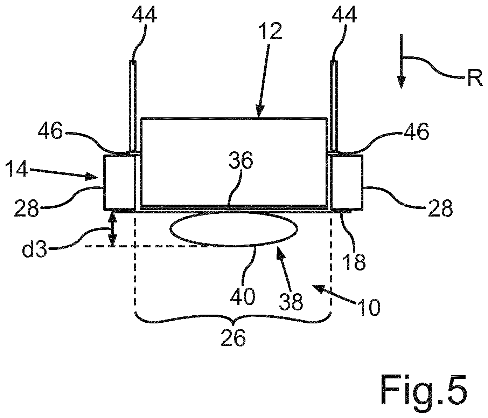

In der Endposition, wie in Fig. 5 dargestellt, liegen die am Modulgehäuse des Batteriemoduls 12 angeordneten Flansche 46 auf den Querstegen 28 an und die Kühleinrichtung 18 befindet sich im ebenen, planaren Zustand. In diesem Zustand ist auch die Wärmeleitkomponente 36 gleichmäßig und homogen über den gesamten Modul-Aufsetzbereich 26 verteilt.

Anstelle eines einzigen Abstützelements 40, wie in den Fig. 3 bis Fig. 5 dargestellt, können auch wiederum mehrere Abstützelemente 40 pro Modul-Aufsetzbereich 26 vorgesehen sein.

Die Gegenhalter-Einrichtung 38 kann zudem beispielsweise auch zumindest zum Teil deformierbar und/oder elastisch ausgebildet sein, und/oder ein pneumatisches und/oder hydraulisches System, zum Beispiel ein Luftbalgsystem oder ähnliches umfassen. In gleicher Weise kann aber auch hier die in Fig. 1 dargestellte Gegenhalter-Einrichtung zum Abstützen der Kühleinrichtung 18 vorgesehen sein und ebenso beweglich ausgebildet sein.

Insgesamt zeigen die Beispiele, wie durch die Erfindung eine Anordnungsvorrichtung und ein Verfahren bereitgestellt werden, welche eine besonders effiziente Ausbildung einer Batterieanordnung und eine besonders effiziente Anbindung von Batteriemodulen an eine Kühleinrichtung ermöglichen. Insbesondere lässt sich hierdurch auf besonders vorteilhafterweise eine besonders geringe und gleichmäßige Schichtdicke bzw. Schichtstärke des Gapfillers einstellen.

## Patentansprüche

1. Verfahren zum Anordnen zumindest eines Batteriemoduls (12) in zumindest einem Teil (14) eines Batteriegehäuses (16) mit einer Kühleinrichtung (18), mit den Schritten:
- Bereitstellen des zumindest einen Teils des Batteriegehäuses (16), welcher eine Einsetzöffnung (30) zum Einsetzten des mindestens einen Batteriemoduls (12) aufweist und die Kühleinrichtung (18), welche auf einer der Einsetzöffnung (30) gegenüberliegenden Seite des Teils (14) des Batteriegehäuses (16) angeordnet ist, wobei die Kühleinrichtung (18) eine der Einsetzöffnung (30) zugewandte erste Seite (32) aufweist, und einen vorbestimmen Modul-Aufsetzbereich (26) aufweist;
- Einbringen einer Wärmeleitkomponente (36) auf die erste Seite (32) der Kühleinrichtung (18) zumindest im vorbestimmten Modul-Aufsetzbereich (26);
- Einsetzen des zumindest einen Batteriemoduls (12) im Modul-Aufsetzbereich (26);
- Anpressen des Batteriemoduls (12) in einer in Richtung der Kühleinrichtung (18) verlaufenden Pressrichtung (R);
wobei zumindest vor dem Anpressen des Batteriemoduls (12) eine Gegenhalter-Einrichtung (38) auf einer der ersten Seite (32) der Kühleinrichtung (18) gegenüberliegenden und der Einsetzöffnung (30) abgewandten zweiten Seite (42) angeordnet wird, die die Kühleinrichtung (18) beim Anpressen des zumindest einen Batteriemoduls (12) im vorbestimmten Modul-Aufsetzbereich (26) abstützt,
**dadurch gekennzeichnet, dass**
durch die Kühleinrichtung (18) der Gehäuseboden des Batteriegehäuses (16) gebildet ist und die Gegenhalter-Einrichtung (38) nach dem Anpressen des Batteriemoduls (12) von dem Gehäuseboden entfernt wird.

2. Verfahren nach Anspruch 1,
**dadurch gekennzeichnet, dass**
die Kühleinrichtung (18) als Kühlplatte mit Kühlkanälen (22) ausgebildet ist, wobei die Kühlkanäle (22) zumindest bereichsweise voneinander durch Zwischenbereiche (24) der Kühlplatte separiert sind, durch welche keiner der Kühlkanäle (22) verläuft.

3. Verfahren nach Anspruch 2,
**dadurch gekennzeichnet, dass**
die Gegenhalter-Einrichtung (38) mindestens ein Abstützelement (40) aufweist, welches die zweite Seite der Kühleinrichtung (18) zum Abstützen nur in zumindest einem der Zwischenbereiche (24) der Kühlplatte kontaktiert.

4. Verfahren nach einem der vorhergehenden Ansprüche,
**dadurch gekennzeichnet, dass**
zumindest ein Teil (40) der Gegenhalter-Einrichtung (38) in Pressrichtung (R) beweglich ausgebildet ist, und während des Anpressens des mindestens einen Batteriemoduls (12) in Pressrichtung (R) bewegt wird.

5. Verfahren nach Anspruch 4,
**dadurch gekennzeichnet, dass**
mittels der Gegenhalter-Einrichtung (38) vor dem Anpressen des zumindest einen Batteriemoduls (12) eine entgegen der Pressrichtung (R) wirkende Gegenkraft im Modul-Aufsetzbereich (26) auf die Kühleinrichtung (18) aufgebracht wird, so dass vor dem Anpressen die Kühleinrichtung (18) im Modul-Aufsetzbereich (26) eine Wölbung entgegen der Pressrichtung (R) aufweist.

6. Verfahren nach Anspruch 5,
**dadurch gekennzeichnet, dass**
während des Anpressens des mindestens einen Batteriemoduls (12) der mindestens eine Teil (40) der Gegenhalter-Einrichtung (38) in Pressrichtung (R) bewegt wird, bis die Kühleinrichtung (18) im Modul-Aufsetzbereich (26) planar ausgerichtet ist.

7. Verfahren nach einem der vorhergehenden Ansprüche,
**dadurch gekennzeichnet, dass**
das der Teil (14) des Batteriegehäuses (16) in Pressrichtung (R) verlaufende und den vorbestimmten Modul-Aufsetzbereich (26) senkrecht zur Pressrichtung (R) begrenzende Begrenzungselemente (28) aufweist, die an der Kühleinrichtung (18) montiert sind.

8. Verfahren nach einem der vorhergehenden Ansprüche,
**dadurch gekennzeichnet, dass**
das zumindest eine Batteriemodul (12) ein Modulgehäuse aufweist, an welchem an zumindest zwei gegenüberliegenden Seiten ein Flansch (46) angeordnet ist, wobei das Anpressen des Batteriemoduls (12) mittels eines Anpresswerkzeugs (44) erfolgt, welches eine Anpresskraft in Pressrichtung (R) auf die Flansche (46) ausübt.

9. Verfahren nach Anspruch 8,
**dadurch gekennzeichnet, dass**
das Batteriemodul (12) während des Anpressens soweit in Pressrichtung (R) bewegt wird, bis eine der Kühleinrichtung (18) zugewandte Seite der Flansche (46) auf den Begrenzungselementen (28) aufliegt.

10. Anordnungsvorrichtung (10) zum Anordnen zumindest eines Batteriemoduls (12) in zumindest einem Teil (14) eines Batteriegehäuses (16) mit einer Kühleinrichtung (18), wobei die Anordnungsvorrichtung (10) dazu ausgelegt ist, das zumindest eine Batteriemodul (12) in einem in einem vorbestimmten Modul-Aufsetzbereich (26) der Kühleinrichtung (18) auf eine Wärmeleitkomponente (36) angeordneten Zustand in eine in Richtung der Kühleinrichtung (18) verlaufende Pressrichtung (R) anzupressen,
**dadurch gekennzeichnet, dass**
die Kühleinrichtung (18) den Gehäuseboden des Batteriegehäuses (16) bildet, wobei die Anordnungsvorrichtung eine Gegenhalter-Einrichtung (38) aufweist, die dazu ausgelegt ist, in einem auf einer Seite der Kühleinrichtung (18) angeordneten Zustand, die Kühleinrichtung (18) beim Anpressen des zumindest einen Batteriemoduls (12) im vorbestimmten Modul-Aufsetzbereich (26) abzustützen und nach dem Anpressen entfernt zu werden.

## Claims

1. Method for arranging at least one battery module (12) in at least one part (14) of a battery housing (16) having a cooling apparatus (18), comprising the following steps:
- providing the at least one part of the battery housing (16), which has an insertion opening (30) for inserting the at least one battery module (12), and the cooling apparatus (18), which is arranged on a side of the part (14) of the battery housing (16) opposite to the insertion opening (30), wherein the cooling apparatus (18) has a first side (32) facing the insertion opening (30), and a predetermined module placement area (26);
- placing a thermal conduction component (36) on the first side (32) of the cooling apparatus (18) at least in the predetermined module placement area (26);
- inserting the at least one battery module (12) in the module placement area (26);
- pressing the battery module (12) in a pressing direction (R) extending towards the cooling apparatus (18);
wherein at least before the pressing of the battery module (12), there is arranged on a second side (42) that is opposite the first side (32) of the cooling apparatus (18) and faces away from the insertion opening (30) a counterholder device (38), which supports the cooling apparatus (18) during pressing of the at least one battery module (12) in the predetermined module placement area (26),
**characterised in that**
the housing floor of the battery housing (16) is formed by the cooling apparatus (18) and the counterholder device (38) is removed from the housing floor after the pressing of the battery module (12).

2. Method according to claim 1,
**characterised in that**
the cooling apparatus (18) is configured as a cooling plate with cooling channels (22), wherein the cooling channels (22) are separated from one another, at least in certain areas, by intermediate areas (24) of the cooling plate, through which none of the cooling channels (22) extend.

3. Method according to claim 2,
**characterised in that**
the counterholder device (38) has at least one support element (40), which contacts the second side of the cooling apparatus (18) for support only in at least one of the intermediate areas (24) of the cooling plate.

4. Method according to any one of the preceding claims,
**characterised in that**
at least a part (40) of the counterholder device (38) is configured so as to be moveable in the pressing direction (R) and is moved in the pressing direction (R) during pressing of the at least one battery module (12).

5. Method according to claim 4,
**characterised in that**
a counter-force, acting contrary to the pressing direction (R), is applied by means of the counterholder device (38) to the cooling apparatus (18) in the module placement area (26) before the pressing of the at least one battery module (12), such that before the pressing the cooling apparatus (18) has, in the module placement area (26), a curvature that is contrary to the pressing direction (R).

6. Method according to claim 5,
**characterised in that**
during the pressing of the at least one battery module (12) the at least one part (40) of the counterholder device (38) is moved in the pressing direction (R) until the cooling apparatus (18) has, in the module placement area (26), a planar alignment.

7. Method according to any one of the preceding claims,
**characterised in that**
the part (14) of the battery housing (16) has delimiting elements (28) that extend in the pressing direction (R) and delimit the predetermined module placement area (26) perpendicularly to the pressing direction (R), and which are mounted on the cooling apparatus (18).

8. Method according to any one of the preceding claims,
**characterised in that**
the at least one battery module (12) has a module housing, on which a flange (46) is arranged on at least two opposite sides, wherein the pressing of the battery module (12) takes place by means of a pressing tool (44), which exerts on the flange (46) a pressing force in the pressing direction (R).

9. Method according to claim 8,
**characterised in that**
during the pressing, the battery module (12) is moved in the pressing direction (R) until a side of the flange (46) facing the cooling apparatus (18) abuts the delimiting elements (28).

10. Arrangement device (10) for arranging at least one battery module (12) in at least one part (14) of a battery housing (16) having a cooling apparatus (18), wherein the arrangement device (10) is adapted to press the at least one battery module (12), in a state that is arranged on a thermal conduction component (36) in a predetermined module placement area (26) of the cooling apparatus (18), in a pressing direction (R) that extends towards the cooling apparatus (18),
**characterised in that**
the cooling apparatus (18) forms the housing floor of the battery housing (16), the arrangement device having a counterholder device (38), which is adapted, in a state arranged on one side of the cooling apparatus (18), to support the cooling apparatus (18) during the pressing of the at least one battery module (12) in the predetermined module placement area (26) and to be removed after the pressing.

## Revendications

1. Procédé d'agencement d'au moins un module de batterie (12) dans au moins une partie (14) d'un boîtier de batterie (16) avec un dispositif de refroidissement (18), comprenant les étapes consistant à :
- fournir la au moins une partie du boîtier de batterie (16), qui présente une ouverture d'insertion (30) permettant d'insérer le au moins un module de batterie (12), et le dispositif de refroidissement (18), qui est agencé sur un côté, situé à l'opposé de l'ouverture d'insertion (30), de la partie (14) du boîtier de batterie (16), dans lequel le dispositif de refroidissement (18) présente un premier côté (32) tourné vers l'ouverture d'insertion (30) et présente une région de placement de module (26) prédéterminée ;
- mettre en place un composant conducteur de chaleur (36) sur le premier côté (32) du dispositif de refroidissement (18) au moins dans la région de placement de module (26) prédéterminée ;
- insérer le au moins un module de batterie (12) dans la région de placement de module (26) ;
- presser sur le module de batterie (12) dans une direction de pression (R) s'étendant en direction du dispositif de refroidissement (18) ;
dans lequel, au moins avant la pression sur le module de batterie (12), un dispositif de contre-support (38) est agencé sur un second côté (42) situé à l'opposé du premier côté (32) du dispositif de refroidissement (18) et se détournant de l'ouverture d'insertion (30) et qui supporte le dispositif de refroidissement (18) lors de la pression sur le au moins un module de batterie (12) dans la région de placement de module (26) prédéterminée,
**caractérisé en ce que**
le fond de boîtier du boîtier de batterie (16) est formé par le dispositif de refroidissement (18), et le dispositif de contre-support (38) est retiré du fond de boîtier après la pression sur le module de batterie (12).

2. Procédé selon la revendication 1,
**caractérisé en ce que**
le dispositif de refroidissement (18) est réalisé sous la forme d'une plaque de refroidissement avec des canaux de refroidissement (22), dans lequel les canaux de refroidissement (22) sont au moins localement séparés les uns des autres par des régions intermédiaires (24) de la plaque de refroidissement à travers lesquelles ne s'étend aucun des canaux de refroidissement (22).

3. Procédé selon la revendication 2,
**caractérisé en ce que**
le dispositif de contre-support (38) présente au moins un élément de support (40) qui vient en contact avec le second côté du dispositif de refroidissement (18) afin de ne supporter que dans au moins une des régions intermédiaires (24) de la plaque de refroidissement.

4. Procédé selon l'une quelconque des revendications précédentes,
**caractérisé en ce que**
au moins une partie (40) du dispositif de contre-support (38) est réalisée de manière mobile dans la direction de pression (R), et est déplacée dans la direction de pression (R) pendant la pression sur le au moins un module de batterie (12).

5. Procédé selon la revendication 4,
**caractérisé en ce que**
une contre-force agissant à l'encontre de la direction de pression (R) est appliquée au dispositif de refroidissement (18) dans la région de placement de module (26) au moyen du dispositif de contre-support (38) avant la pression sur le au moins un module de batterie (12), de sorte que, avant la pression, le dispositif de refroidissement (18) présente dans la région de placement de module (26) une courbure opposée à la direction de pression (R).

6. Procédé selon la revendication 5,
**caractérisé en ce que** la au moins une partie (40) du dispositif de contre-support (38) est déplacée dans la direction de pression (R) pendant la pression sur le au moins un module de batterie (12) jusqu'à ce que le dispositif de refroidissement (18) soit aligné de manière plane dans la région de placement de module (26).

7. Procédé selon l'une quelconque des revendications précédentes,
**caractérisé en ce que**
la partie (14) du boîtier de batterie (16) présente des éléments de délimitation (28), s'étendant dans la direction de pression (R) et délimitant la région de placement de module (26) prédéterminée de manière perpendiculaire à la direction de pression (R), et qui sont montés sur le dispositif de refroidissement (18).

8. Procédé selon l'une quelconque des revendications précédentes,
**caractérisé en ce que**
le au moins un module de batterie (12) présente un boîtier de module sur au moins deux côtés opposés duquel est agencée une bride (46), dans lequel la pression sur le module de batterie (12) intervient au moyen d'un outil de pression (44) qui exerce sur les brides (46) une force de pression dans la direction de pression (R).

9. Procédé selon la revendication 8,
**caractérisé en ce que**
pendant la pression, le module de batterie (12) est déplacé dans la direction de pression (R) jusqu'à ce qu'un côté de la bride (46) tourné vers le dispositif de refroidissement (18) repose sur les éléments de délimitation (28).

10. Dispositif d'agencement (10) permettant d'agencer au moins un module de batterie (12) dans au moins une partie (14) d'un boîtier de batterie (16) avec un dispositif de refroidissement (18), dans lequel le dispositif d'agencement (10) est conçu pour presser le au moins un module de batterie (12) dans une direction de pression (R) s'étendant dans la direction du dispositif de refroidissement (18) jusqu'à un état d'agencement sur un composant conducteur de chaleur (36) au sein d'une région de placement de module (26) prédéterminée du dispositif de refroidissement (18),
**caractérisé en ce que**
le dispositif de refroidissement (18) forme le fond de boîtier du boîtier de batterie (16), dans lequel le dispositif d'agencement présente un dispositif de contre-support (38) conçu, lorsqu'il se trouve dans un état d'agencement sur un côté du dispositif de refroidissement (18), pour supporter le dispositif de refroidissement (18) lors de la pression sur le au moins un module de batterie (12) dans la région de placement de module (26) prédéterminée et être retiré après la pression.
